# FASCICULE DE BREVET EUROPEEN

(11) **EP 3 612 970 B1**
(45) Date de publication et mention de la délivrance du brevet: **19.03.2025**
(21) Numéro de dépôt: 18720334.4
(22) Date de dépôt: 13.04.2018
(51) Int. Cl.: G06F 21/60

(54) **PROCÉDÉ DE GESTION D'UN SYSTÈME INFORMATIQUE EN NUAGE**
VERFAHREN ZUR VERWALTUNG EINES CLOUD-RECHNERSYSTEMS
METHOD FOR MANAGING A CLOUD COMPUTING SYSTEM

(30) Priorité: 21.04.2017 FR 1753493
(43) Date de publication de la demande: 26.02.2020
(73) Titulaire: Orange, 92130 Issy-les-Moulineaux (FR)
(72) Inventeur: HE, Ruan, 92326 Châtillon cedex (FR); HAN, Xiao, 92326 Châtillon cedex (FR)
(74) Mandataire: Cabinet Beau de Loménie
(86) Numéro de dépôt international: PCT/FR2018/050942
(87) Numéro de publication internationale: WO 2018/193191

(56) Documents cités:
- EP-A1- 2 819 052
- US-A1- 2005 257 244
- SALIM KHAMADJA ET AL: "Designing flexible access control models for the cloud", SECURITY OF INFORMATION AND NETWORKS, ACM, 2 PENN PLAZA, SUITE 701 NEW YORK NY 10121-0701 USA, 26 November 2013 (2013-11-26), pages 225 - 232, XP058036026, ISBN: 978-1-4503-2498-4, DOI: 10.1145/2523514.2527005

## Description

### Arrière-plan de l'invention

L'invention se rapporte au domaine général des systèmes informatiques, et notamment aux systèmes informatiques dits « en nuage », connus également sous le nom de systèmes de « cloud computing ».

Elle concerne plus particulièrement le contrôle de l'accès par un utilisateur d'une entité cliente du système de cloud computing (aussi désignée plus simplement par « client » dans la description), via un terminal par exemple, à des ressources informatiques et réseaux mises à la disposition de cette entité cliente par un système de cloud computing. Par entité cliente ou client du système de cloud computing, on entend ici un système d'information (ex. système informatique d'une organisation ou d'une entreprise, application, etc.), locataire des ressources mises à disposition par le système de cloud computing (aussi appelé « tenant » en anglais).

Selon la définition donnée par le National Institute of Standards and Technology (NIST), l'informatique en nuage ou « cloud computing » est un modèle permettant à des utilisateurs, ou plus généralement à des clients, d'accéder via un réseau, à la demande et en libre-service, à des ressources informatiques et réseaux telles que par exemple un espace de stockage, de la puissance de calcul, des applications, un accès réseau, des logiciels ou encore des services, qui sont virtualisées (i.e. rendues virtuelles) et mutualisées entre ces clients. Autrement dit, les ressources informatiques ne se trouvent plus sur un serveur local ou sur un poste d'utilisateur, mais sont, conformément au concept de cloud computing, dématérialisées dans un nuage composé de plusieurs serveurs physiquement distants interconnectés entre eux, et accessibles par les clients et leurs utilisateurs via par exemple une application réseau. Les clients et plus particulièrement leurs utilisateurs peuvent ainsi accéder de manière évolutive à ces ressources, sans avoir à gérer l'infrastructure sous-jacente de gestion de ces ressources qui est souvent complexe.

Le concept de « cloud computing » est décrit plus en détail dans le document édité par l'ITU (International Telecommunication Union) intitulé « FG Cloud TR, version 1.0 - Part 1 : Introduction to the cloud ecosystem : définitions, taxonomies, use cases and high-level requirements », février 2012.

De façon connue, le « cloud computing » bénéficie de nombreux avantages :
- flexibilité et diversité des ressources qui sont mutualisées et quasiment illimitées,
- évolutivité possible des ressources, fournies à la demande,
- administration simple et automatisée des infrastructures informatiques et réseaux des entreprises, et réduction des coûts d'administration,
- etc.

Un enjeu majeur du concept de « cloud computing » est de garantir la protection et la sécurisation de l'accès aux ressources, ces ressources étant en effet partagées par plusieurs clients distincts et hétérogènes du système de cloud computing. On dit également du système de cloud computing qu'il est multi-entités ou « multi-tenant » en anglais.

Pour garantir la sécurité d'un système informatique en nuage, il est nécessaire de définir, pour chaque client du système informatique en nuage, un modèle de contrôle d'accès et une politique de contrôle d'accès s'appuyant sur ce modèle pour ses utilisateurs et pour les ressources qui lui sont allouées dynamiquement et virtuellement. Une politique de contrôle d'accès est un ensemble de règles qui permet de réguler l'accès des utilisateurs aux ressources du client. Par exemple, une telle politique de contrôle d'accès spécifie via un ensemble de règles les droits des utilisateurs pour accéder à différents fichiers du client stockés sur un disque ; ces règles peuvent indiquer à titre illustratif que l'utilisateur Bob a des droits en lecture sur un fichier F1.h et que l'utilisateur Alice a des droits en écriture sur un fichier F2.c. Cette politique de contrôle d'accès s'appuie sur un modèle de contrôle d'accès qui définit la façon dont la décision d'autoriser ou non l'accès à la ressource est prise.

Il existe dans l'état de la technique, de nombreux modèles de contrôle d'accès qui permettent d'encadrer l'usage des ressources d'un client : ces modèles sont généralement conçus pour vérifier si une entité active (aussi désigné par sujet) telle un utilisateur via un terminal, peut accéder à une entité passive (aussi désignée par objet) telle une ressource informatique et réseau, en effectuant une opération donnée (aussi désignée par action), et le cas échéant, autoriser l'accès à l'entité passive par l'entité active via ladite opération. Des modèles de contrôle d'accès connus plus ou moins complexes sont par exemple les modèles RBAC (Role-Based Access Control), OrBAC (Organization-Based Access Control), ou encore MLS (MultiLevel Security).

Ces modèles ont été conçus à la base pour gérer le contrôle d'accès dans un système informatique associé à une même entité. Les systèmes informatiques en nuage s'appuient aujourd'hui sur ces modèles, mais en sélectionnent un unique qu'ils imposent de manière uniforme à chacun de leurs clients. En d'autres mots, tous les clients d'un système informatique en nuage définissent leurs politiques de contrôle d'accès en s'appuyant sur le même modèle de contrôle d'accès choisi par l'opérateur du système informatique en nuage, comme par exemple sur le modèle OrBAC ou sur le modèle RBAC.

Une configuration aussi rigide n'est de toute évidence pas bien adaptée au paysage actuel des systèmes d'information et des télécommunications qui promeut l'avènement de multiples acteurs et applications amenés à partager des ressources informatiques et réseaux via des systèmes informatiques en nuage, ces acteurs et applications multiples ayant des besoins distincts en matière de politiques de sécurité et plus particulièrement de politiques de contrôle d'accès.

Le document EP2819052 A1 décrit un procédé de traitement d'une requête d'accès d'un terminal d'un utilisateur à une ressource mise à la disposition d'une entité cliente par une plateforme d'un fournisseur de service informatique en nuage, ce procédé étant destiné à être mis en oeuvre par un module d'authentification et d'autorisation d'un serveur dédié à l'entité cliente, et comprenant, suite à la réception de la requête d'accès : - l'authentification de l'utilisateur à l'aide de premiers paramètres d'authentification de l'utilisateur auprès du serveur ; - la vérification que l'utilisateur est autorisé à accéder à la ressource en appliquant à l'utilisateur et à la ressource un modèle de contrôle d'accès et une politique de contrôle d'accès correspondant à ce modèle obtenus pour l'entité cliente ; - si l'utilisateur est autorisé à accéder à la ressource, l'envoi vers la plateforme d'une requête dérivée de la requête d'accès à partir de seconds paramètres d'authentification de l'entité cliente auprès de la plateforme ; - sinon le rejet de la requête d'accès.

Le document SALIM KHAMADJA ET AL: "Designing flexible access control models for the cloud",SECURITY OF INFORMATION AND NETWORKS, ACM, 2 PENN PLAZA, SUITE 701 NEW YORK NY 10121-0701 USA, 26 novembre 2013 (2013-11-26), pages 225-232, décrit un procédé permettant de spécifier le contrôle d'accès dans des environnements de type cloud. Ce procédé est basé sur un méta-modèle de contrôle d'accès générique appelé CatBAC associé à une technique de raffinement du méta-modèle pour obtenir un modèle concret.

### Objet et résumé de l'invention

L'invention permet de remédier notamment à cet inconvénient en proposant un procédé de gestion d'un système informatique en nuage selon la revendication indépendante 1.

Corrélativement, l'invention vise aussi un système informatique en nuage selon la revendication indépendante 11.

L'invention propose donc, qu'au lieu d'imposer un même modèle de contrôle d'accès à tous ses clients, le système informatique en nuage leur fournisse un méta-modèle prédéfini permettant à chacun des clients du système informatique en nuage de créer son propre modèle de contrôle d'accès et de baser sa politique de contrôle d'accès sur le modèle ainsi créé.

Ce nouveau paradigme en matière de contrôle d'accès dans un contexte de cloud computing est particulièrement flexible et permet à chaque client de définir avec plus de liberté une politique de contrôle d'accès qui lui est propre et s'adapte à ses spécificités et à ses besoins en matière de sécurité.

Cette définition est faite à la volée (autrement dit de manière dynamique) par le client à partir du méta-modèle fourni par le système informatique en nuage : le méta-modèle définit de manière générique un certain nombre d'éléments permettant de créer un modèle de contrôle d'accès et de spécifier une politique de contrôle d'accès s'appuyant sur ce modèle, que le client vient instancier auprès du système informatique en nuage (autrement dit, il vient renseigner les éléments du méta-modèle pour créer le modèle de contrôle d'accès sur lequel il souhaite baser sa politique de contrôle d'accès).

Ainsi, au lieu de protéger le système informatique en nuage comme un tout via un unique modèle de contrôle d'accès, l'invention permet de limiter et d'adapter l'étendue de la protection à chaque client. Chaque client peut avoir un contrôle personnalisé de l'accès aux ressources qui lui sont allouées dynamiquement et virtuellement par le système informatique en nuage.

On note que cette façon de gérer le contrôle de l'accès aux ressources au niveau du système informatique en nuage est particulièrement bien adaptée au caractère évolutif des ressources et des clients au sein d'un système informatique en nuage. De même qu'un modèle et une politique de contrôle d'accès peuvent être créés à la volée pour un client du système informatique en nuage, ceux-ci peuvent être supprimés à la volée dès lors que ce client n'est plus servi par le système informatique en nuage.

Le nouveau paradigme proposé par l'invention est donc flexible, dynamique, adaptatif et évolutif.

Si l'invention permet de définir une pluralité de modèles et de politiques de contrôle d'accès distincts pour chacun des clients du système informatique en nuage, elle s'appuie néanmoins sur un méta-modèle unique commun à tous les clients, et un contrôle d'accès aux ressources réalisé de façon centralisée par le système informatique en nuage. Ceci permet d'assurer la consistance du contrôle d'accès aux ressources fournies par le système informatique en nuage mis en œuvre et renforce son efficacité. En outre, si les ressources allouées à un client se trouvent distribuées sur une pluralité de centres de données (« data center ») distincts, la même politique de contrôle d'accès est alors appliquée par chacun des centres de données.

Il convient de noter que les clients d'un système informatique en nuage peuvent, via le méta-modèle fourni par le système informatique en nuage, baser leur politique de contrôle d'accès sur un modèle de contrôle d'accès connu. Ainsi, dans un mode particulier de réalisation de l'invention, l'instance du méta-modèle fournie par le client définit un modèle de contrôle d'accès de type RBAC, OrBAC, ACL, DTE, ABAC ou MLS.

L'invention permet également de créer de nouveaux modèles de contrôle d'accès, ou d'adapter les modèles de contrôle d'accès existants en introduisant de nouvelles caractéristiques dans ces modèles (ex. ajout de nouvelles entités aux modèles, définition de nouvelles catégories d'attributs associées à ces entités, introduction de notions dans les modèles de contrôle d'accès connus telles que la notion de session, de délégation, de hiérarchie, de contrôle d'usage, etc.), permettant d'intégrer des fonctionnalité avancées et inédites dans le contrôle d'accès réalisé.

A cet effet, comme mentionné précédemment, le méta-modèle proposé par le système informatique en nuage à ses clients comprend avantageusement une pluralité d'éléments permettant de définir le modèle de contrôle d'accès adopté par le client pour sa politique de contrôle d'accès. Dans un mode particulier de réalisation, la pluralité d'éléments du méta-modèle comprend :
- un périmètre du modèle de contrôle d'accès définissant une pluralité d'entités impliquées dans la politique de contrôle d'accès du client. Par exemple, la pluralité d'entités impliquées comprend au moins un sujet, et/ou un objet et/ou une action ;
- des métadonnées définissant pour chaque entité au moins une catégorie d'attributs associée à cette entité ;
- des données définissant des valeurs possibles pour chaque catégorie d'attributs définie par les métadonnées ;
- au moins une métarègle identifiant au moins une catégorie d'attributs définie par les métadonnées et utilisée pour fournir une instruction conforme à la politique de contrôle d'accès du client ;
- au moins une règle de contrôle d'accès basée sur ladite au moins une métarègle et fournissant une instruction conforme à la politique de contrôle d'accès du client ; et
- un ensemble de valeurs assignées par le client à chaque entité définie pour ce client dans le périmètre du modèle de contrôle d'accès, pour chaque catégorie d'attributs associée à cette entité et comprise dans une métarègle, lesdites valeurs assignées étant choisies parmi les données.

Ces différents éléments forment un méta-modèle générique offrant un cadre flexible permettant de créer des modèles de contrôle d'accès et de définir des politiques de contrôle d'accès très diversifiés.

Ainsi, dans un mode particulier de réalisation, au moins une catégorie d'attributs définie pour une entité est choisie parmi :
- un niveau de sécurité (ex. niveau de sécurité d'un sujet ou d'un objet) ;
- un rôle (ex. rôle d'un sujet) ;
- un type (ex. type d'objet) ;
- un domaine (ex. domaine auquel a accès un sujet).

Dans un mode particulier de réalisation, au moins une instruction fournie par une règle comprend une autorisation ou un refus d'un accès à une ressource déterminée allouée au client par le système informatique en nuage.

Ainsi, l'invention, par l'intermédiaire du méta-modèle proposé au client, permet à celui-ci de définir une politique de contrôle d'accès classique au moyen de règles autorisant ou refusant l'accès à une ressource en fonction des valeurs des attributs associés à une ou plusieurs entités.

Dans un mode particulier de réalisation, l'instance du méta-modèle est fournie par le client via une interface de configuration du système informatique en nuage commune à la pluralité de clients du système informatique en nuage.

Le méta-modèle proposé par le système informatique en nuage étant commun à tous les clients du système informatique en nuage, il peut avantageusement être instancié via une interface de contrôle unifiée pour tous les clients.

Ainsi, au vu de ce qui précède, l'invention s'appuie sur un méta-modèle fourni par un système informatique à ses clients pour définir leurs propres modèles de contrôle d'accès et sur le système informatique à proprement parler apte à fournir un tel méta-modèle. Elle s'appuie également sur le dispositif utilisé par chaque client pour instancier le méta-modèle proposé par le système informatique en nuage et créer par là-même le modèle de contrôle d'accès qu'il souhaite voir appliquer à ses utilisateurs.

Selon un autre aspect, l'invention vise donc aussi un procédé d'instanciation par un client d'un système informatique en nuage selon la revendication indépendante 7.

Le procédé d'instanciation et le dispositif du client du système informatique en nuage bénéficient des mêmes avantages cités précédemment que le procédé de gestion et le système informatique en nuage.

Dans un mode particulier de réalisation, les différentes étapes du procédé de gestion et/ou du procédé d'instanciation sont déterminées par des instructions de programmes d'ordinateurs.

En conséquence, l'invention vise aussi un programme d'ordinateur sur un support d'informations, ce programme étant susceptible d'être mis en œuvre dans un système informatique en nuage ou plus généralement dans un ordinateur, ce programme comportant des instructions adaptées à la mise en œuvre des étapes d'un procédé de gestion tel que décrit ci-dessus. L'invention vise également un programme d'ordinateur sur un support d'informations, ce programme étant susceptible d'être mis en œuvre dans un dispositif d'un client d'un système informatique en nuage ou plus généralement dans un ordinateur, ce programme comportant des instructions adaptées à la mise en œuvre des étapes d'un procédé d'instanciation tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système comprenant :
- un système informatique en nuage selon l'invention, apte à allouer à une pluralité de clients des ressources informatiques et réseaux, chaque client étant associé à au moins un utilisateur susceptible d'accéder aux ressources informatiques et réseaux allouées au client par le système informatique en nuage; et
- une pluralité de dispositifs des clients du système informatique en nuage conformes à l'invention.

On peut également envisager, dans d'autres modes de réalisation, que le procédé de gestion, le procédé d'instanciation, le système informatique en nuage, le dispositif d'un client du système informatique en nuage et le système selon l'invention présentent en combinaison tout ou partie des caractéristiques précitées.

L'invention est définie par les revendications annexées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système selon l'invention comprenant un système informatique en nuage et des dispositifs clients du système informatique en nuage, conformes à l'invention ;
- la figure 2A représente l'architecture matérielle sur laquelle s'appuie le système informatique en nuage de la figure 1 ;
- la figure 2B représente différents éléments fonctionnels du système informatique en nuage de la figure 1 configurés pour mettre en œuvre le procédé de gestion selon l'invention ;
- la figure 3A représente l'architecture matérielle des dispositifs clients de la figure 1 ;
- la figure 3B représente différents éléments fonctionnels des dispositifs clients de la figure 1 configurés pour mettre en œuvre le procédé d'instanciation selon l'invention ;
- la figure 4 illustre schématiquement les principaux modules logiciels définis par le standard de référence XACML pour réaliser le contrôle d'accès et mis en œuvre par le système informatique en nuage de la figure 1 ; et
- la figure 5 illustre les principales étapes d'un procédé de gestion selon l'invention tel qu'il est mis en œuvre par le système informatique en nuage de la figure 1, et les principales étapes d'un procédé d'instanciation selon l'invention tel qu'il est mis en œuvre par chaque dispositif client de la figure 1.

### Description détaillée de l'invention

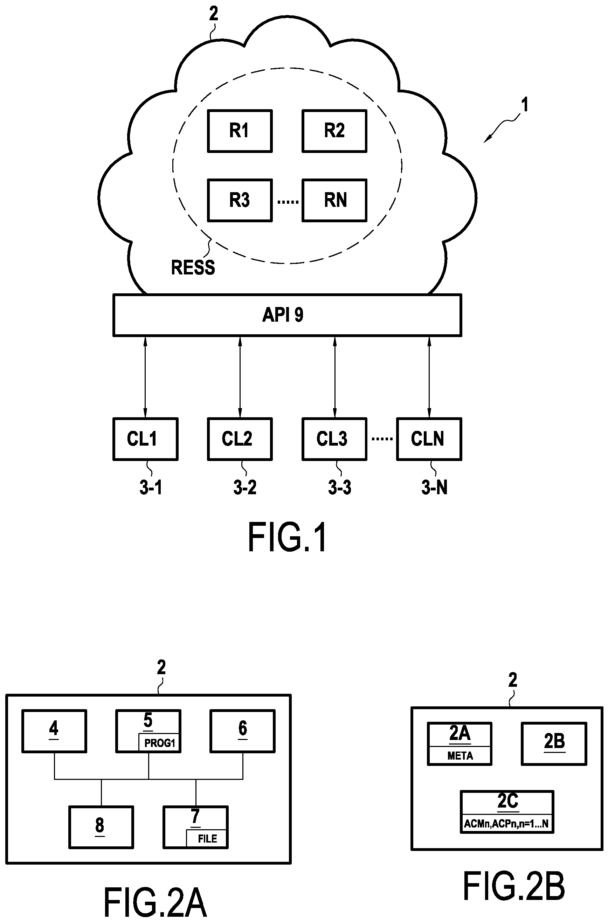

La **figure 1** représente, dans son environnement, un système 1 conforme à l'invention, dans un mode particulier de réalisation.

Dans ce mode de réalisation, le système 1 comprend :
- un système informatique en nuage 2, conforme à l'invention, et apte à allouer à une pluralité de clients CL1, CL2, ..., CLN, N désignant un entier supérieur à 1, des ressources informatiques et réseaux RESS. Aucune limitation n'est attachée à la nature des ressources informatiques et réseaux RESS ; il peut s'agir par exemple d'espace de stockage, de puissance de calcul, d'applications, de connexions réseaux, de logiciels ou encore de services, qui sont virtualisés et mutualisés entre les clients CL1, CL2,...,CLN du système informatique en nuage 2 ; et
- une pluralité de dispositifs 3-1, 3-2, ..., 3-N, associés respectivement à chacun des clients CL1, CL2, ..., CLN du système informatique en nuage 2 et conformes à l'invention. Ces dispositifs communiquent avec le système informatique en nuage 2 via un ou plusieurs réseaux de télécommunications (non représentés) tels que par exemple un réseau WiFI, WLAN, mobile (3G, 4G, 5G, etc.), le réseau public Internet, etc.

Au sens de l'invention, un client CLn, n=1,...,N du système informatique en nuage désigne tout type de système d'information, locataire de ressources Rn mises à disposition dynamiquement et virtuellement par le système informatique en nuage. Un tel client est également appelé « tenant » en anglais. Il peut s'agir par exemple d'un système informatique (IT) d'une organisation ou d'une entreprise, d'une application logicielle, etc. Ce client CLn dispose, de façon connue en soi, pour accéder aux ressources informatiques et réseaux qui lui sont allouées par le système informatique en nuage 2, d'un compte client enregistré auprès du système informatique en nuage. Ce compte client est protégé par un ou plusieurs paramètres d'authentification (ex. identifiant, mot de passe, etc.) permettant au système informatique en nuage 2 d'identifier le client CLn.

Aucune limitation n'est attachée à la nature des clients du système informatique en nuage 2. Chacun de ces clients comprend un ou plusieurs utilisateurs susceptibles d'accéder, via tout type de dispositifs (ex. via un serveur, un terminal tel qu'un ordinateur, un téléphone intelligent (smartphone) ou une tablette numérique, etc.) aux ressources informatiques et réseaux allouées aux clients par le système informatique en nuage 2.

Conformément à l'invention, le contrôle d'accès aux ressources allouées par le système informatique en nuage 2 aux clients CL1, CL2, ..., CLN est assuré par le système informatique en nuage 2. A cet effet, le système informatique en nuage 2 a l'architecture matérielle d'un ordinateur, telle que représentée à la **figure 2A****.** Il comprend notamment un processeur 4, une mémoire morte 5, une mémoire vive 6, une mémoire non volatile 7, ainsi que des moyens de communication 8 avec notamment les dispositifs 3-1, 3-2,...,3-N. Ces moyens de communication 8 intègrent par exemple ici une carte réseau, connue en soi et non détaillée ici, ou tout autre moyen permettant de communiquer sur un réseau de télécommunications. On note que les éléments matériels 4-8 du système informatique en nuage 2 peuvent être localisés sur un unique serveur du système informatique en nuage 2 ou être dispatchés sur plusieurs équipements (ex. plusieurs ordinateurs) du système informatique en nuage 2 communiquant entre eux et ayant chacun l'architecture matérielle illustrée à la figure 2A. Dans le mode de réalisation décrit ici, on suppose que ces éléments matériels sont colocalisés sur un même serveur.

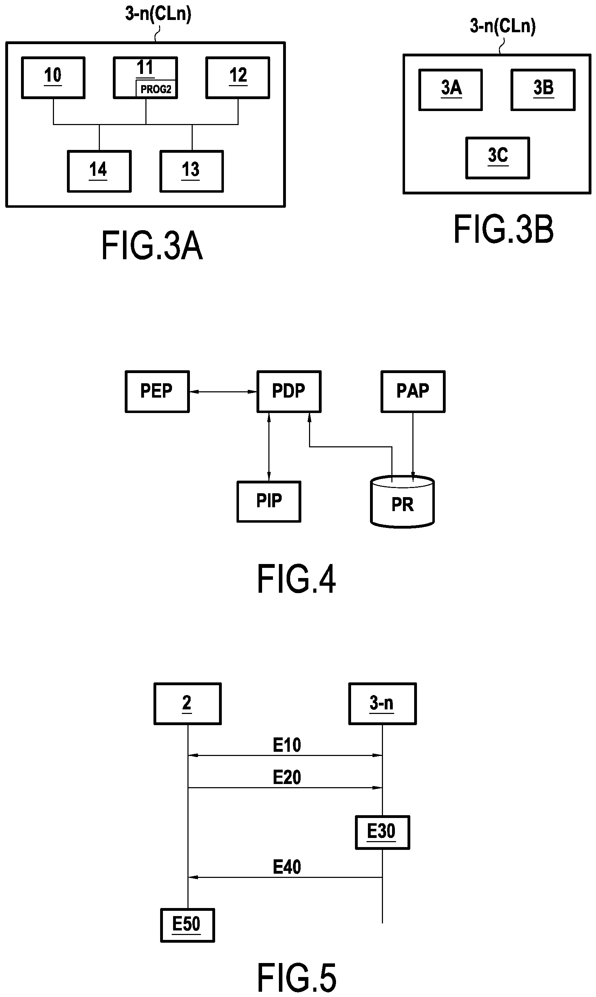

La mémoire morte 5 du système informatique en nuage 2 constitue un support d'enregistrement conforme à l'invention, lisible par le processeur 4 et sur lequel est enregistré un programme d'ordinateur PROG1 conforme à l'invention, comportant des instructions pour l'exécution des étapes d'un procédé de gestion conforme à l'invention, décrites ultérieurement en référence à la figure 5 dans un mode particulier de réalisation.

Ce programme d'ordinateur définit, de façon équivalente, des modules fonctionnels du système informatique en nuage 2 qui s'appuient ou commandent les éléments matériels 4-8 du système informatique en nuage 2, et qui comprennent plus précisément, en référence à la **figure 2B** :
- un module de fourniture 2A, configuré pour fournir aux clients CL1, ..., CLN du système informatique en nuage 2 un méta-modèle META comprenant une pluralité d'éléments permettant à chaque client CLn, n=1,...,N de définir un modèle de contrôle d'accès ACMn et une politique de contrôle d'accès ACPn pour ce client. Le méta-modèle META est décrit sous forme d'instructions dans un fichier informatique FILE stocké ici dans la mémoire non volatile 7 du système informatique en nuage 2 ;
- un module de réception 2B, apte à recevoir de chaque client CLn, n=1,...,N une instance du méta-modèle META fournie par le client CLn, cette instance définissant le modèle de contrôle d'accès ACMn et la politique de contrôle d'accès ACPn basée sur ce modèle de contrôle d'accès définies par le client CLn ; et
- un module de sécurité 2C configuré pour appliquer, pour chaque client CLn, la politique de contrôle d'accès ACPn définie par celui-ci pour contrôler un accès d'un utilisateur de ce client à au moins une ressource parmi les ressources Rn qui lui ont été allouées par le système informatique en nuage 2. On note que le module de sécurité 2C peut être dispatché sur un ou plusieurs équipements (ex. centres de données) du système informatique en nuage 2 selon que les ressources Rn allouées au client sont hébergées par un seul ou plusieurs équipements dans le système informatique en nuage 2.

Les modules de fourniture 2A et de réception 2B s'appuient sur une interface dite de contrôle 9 unifiée du système informatique en nuage 2, que celui-ci met à disposition de ses clients pour accéder au méta-modèle META et l'instancier. Une telle interface peut être par exemple une interface de programmation applicative de type API (Application Programming Interface), connue en soi et non décrite en détail ici, qui permet aux clients CLn de manipuler les différents éléments du méta-modèle META fourni par le système informatique 2 et de l'instancier (c'est-à-dire de le renseigner ou encore de le paramétrer ou de le configurer pour créer un modèle de contrôle d'accès et une politique de contrôle d'accès s'appuyant sur ce modèle).

Les fonctions des modules 2A, 2B et 2C sont décrits plus en détail ultérieurement, lors de la description des étapes du procédé de gestion selon l'invention.

Dans le mode de réalisation décrit ici, chaque dispositif 3-n associé à chaque client CLn (aussi appelé dans la description « dispositif client 3-n »), n=1,...,N a également l'architecture matérielle d'un ordinateur, telle que représentée à la **figure 3A****.** Il comprend notamment un processeur 10, une mémoire morte 11, une mémoire vive 12, une mémoire non volatile 13, ainsi que des moyens de communication 14 avec notamment le système informatique en nuage 2. Ces moyens de communication 14 intègrent par exemple ici une carte réseau, connue en soi et non détaillée ici, ou tout autre moyen permettant de communiquer sur un réseau de télécommunications.

La mémoire morte 11 du dispositif 3-n constitue un support d'enregistrement conforme à l'invention, lisible par le processeur 10 et sur lequel est enregistré un programme d'ordinateur PROG2 conforme à l'invention, comportant des instructions pour l'exécution des étapes d'un procédé d'instanciation conforme à l'invention, décrites ultérieurement en référence à la figure 5 dans un mode particulier de réalisation.

Ce programme d'ordinateur définit, de façon équivalente, des modules fonctionnels du dispositif client 3-n qui s'appuient ou commandent les éléments matériels 10-14 du dispositif 3-n, et qui comprennent plus précisément, en référence à la **figure 3B** :
- un module d'obtention 3A, configuré pour obtenir (c'est-à-dire ici accéder via l'interface de contrôle 9) le méta-modèle META fourni par le système informatique en nuage 2 ;
- un module d'instanciation 3B du méta-modèle META, configuré pour créer (générer ou encore construire) une instance du méta-modèle définissant le modèle de contrôle d'accès ACMn et la politique de contrôle d'accès ACPn basée sur ce modèle de contrôle d'accès sélectionnés par le client CLn ; et
- un module de fourniture 3C, configuré pour fournir cette instance (autrement dit pour fournir le modèle de contrôle d'accès ACMn et la politique de contrôle d'accès ACPn) au système informatique en nuage 2, via ici l'interface de contrôle 9 du système informatique en nuage 2.

Les fonctions des modules 3A, 3B et 3C sont décrits plus en détail ultérieurement, lors de la description des étapes du procédé d'instanciation selon l'invention.

Dans le mode de réalisation décrit ici, le système informatique en nuage 2 s'appuie, pour réaliser le contrôle de l'accès aux ressources qu'il met à disposition de ses clients, sur l'architecture de référence XACML (eXtensible Access Control Markup Language) définie par le standard IETF, illustrée schématiquement à la **figure 4****.**

De façon connue, cette architecture propose un standard pour le déploiement des modules logiciels nécessaires à la mise en œuvre d'un contrôle d'accès dans une infrastructure telle que par exemple le système informatique en nuage 2. Les modules logiciels définis par le standard XACML comprennent notamment un module PDP (pour « Policy Decision Point ») de prise de décision qui applique la politique de contrôle d'accès envisagée aux requêtes d'accès des utilisateurs reçues via un ou plusieurs modules PEP (pour « Policy Enforcement Point) d'exécution. Le module PDP renvoie ici une décision d'autoriser ou non les accès requis (instruction conforme à la politique de contrôle d'accès définie au sens de l'invention). Le module de prise de décision PDP peut à cet effet interroger un module PIP (pour « Policy Information Point ») d'information pour obtenir des informations complémentaires sur les utilisateurs à l'origine de ces requêtes ou toutes autres informations nécessaires à la prise de décision ne figurant pas dans les requêtes. Le standard XACML prévoit également un module logiciel PAP (pour « Policy Administration Point ») d'administration permettant de gérer les politiques d'accès et un répertoire PR (pour « Policy Repository ») dans lequel sont stockées les politiques d'accès à appliquer.

Ces modules logiciels étant définis par le standard XACML, ils ne sont pas décrits en détail ici. Dans le mode de réalisation décrit ici, ces différents modules logiciels sont mis en œuvre par le système informatique en nuage 2. Ils intègrent, pour certains, les modules fonctionnels 2A à 2C du système informatique en nuage 2 décrits précédemment.

Plus particulièrement, les modules fonctionnels 2A et 2B du système informatique en nuage 2 permettant la définition pour chaque client CLn du système informatique en nuage 2 d'un modèle de contrôle d'accès ACMn et d'une politique associée ACPn sont intégrés dans le module PAP. On note que dans le mode de réalisation décrit ici, les catégories d'attributs définies pour chaque modèle de contrôle d'accès ACMn et chaque client CLn sont stockées dans le module PIP, tandis que les règles définissant la politique de contrôle d'accès APCn du client CLn sont stockées dans le répertoire PR.

Le module fonctionnel de sécurité 2C qui est configuré pour appliquer aux requêtes issues d'utilisateurs d'un client CLn la politique de contrôle d'accès ACPn et le modèle de contrôle d'accès ACMn définis pour ce client est intégré dans le module PDP.

Comme mentionné précédemment, le système informatique en nuage 2 s'appuie conformément à l'invention, pour assurer le contrôle d'accès aux ressources RESS qu'il met à disposition de ses clients CL1,...,CLN, sur un méta-modèle META qu'il fournit via l'API 9 aux clients CL1,...,CLN pour configurer et créer leurs politiques d'accès et les modèles de contrôle d'accès sur lesquels ils souhaitent baser ces politiques. Ce méta-modèle META comprend à cet effet une pluralité d'éléments permettant à chaque client CLn, via l'instanciation du méta-modèle par l'intermédiaire de l'API 9, de définir son modèle de contrôle d'accès ACMn et sa politique de contrôle d'accès ACPn.

Plus précisément, dans le mode de réalisation décrit ici, le méta-modèle META comprend les éléments suivants :
- le périmètre du modèle de contrôle d'accès : ce périmètre est destiné à définir les différentes entités impliquées dans la politique de contrôle d'accès spécifiée par le client. Ces entités sont typiquement des sujets (ex. utilisateurs), des objets (ex. ressources) et/ou des actions (ex. opérations réalisées par les sujets sur les objets). Souvent en effet, une politique de contrôle d'accès ne peut pas protéger toutes les entités associées à un client, mais se concentre sur un sous-ensemble limité d'entités, spécifié par le client en instanciant le périmètre du modèle de contrôle d'accès ;
- des métadonnées : ces métadonnées sont destinées à définir pour chaque entité identifiée dans le périmètre du modèle de contrôle d'accès une ou plusieurs catégories d'attributs associées à cette entité. Aucune limitation n'est attachée à la nature des catégories d'attributs pouvant être spécifiées dans les métadonnées par un client. Il peut s'agir par exemple d'un niveau de sécurité pour une entité telle un sujet ou une action, d'une action sur un objet, d'un rôle pour un sujet, d'un type pour un objet, etc. ;
- des données : ces données définissent des valeurs possibles pour chaque catégorie ou type d'attributs défini(e) par les métadonnées. Par exemple, pour un niveau de sécurité d'une action, ces données peuvent inclure les niveaux « bas », « moyen », « élevé » ;
- une ou plusieurs métarègles : chaque métarègle est une sorte d'algorithme logique identifiant une ou plusieurs catégories d'attributs définies par les métadonnées et utilisées pour fournir une instruction (typiquement une décision) conforme à la politique de contrôle d'accès souhaitée par le client. Une métarègle vise à définir la ou les catégories d'attributs utilisées pour construire la politique de contrôle d'accès du client et décrit comment ces catégories sont utilisées (c'est-à-dire liées entre elles) pour fournir une instruction conforme à la politique de contrôle d'accès du client (par exemple pour prendre une décision d'autoriser ou non un accès conformément à la politique de contrôle d'accès du client) ;
- une ou plusieurs règles de contrôle d'accès : chaque règle est basée sur (i.e. associée à) une métarègle, et décrit un algorithme impliquant les entités identifiées par cette métarègle et reprenant la politique de contrôle d'accès du client. En d'autres mots, l'ensemble des règles de contrôle d'accès définit la politique de contrôle d'accès du client. Chaque règle fournit une instruction conforme à la politique de contrôle d'accès du client. Une telle instruction est typiquement une autorisation ou un refus d'un accès à une ressource déterminée allouée au client par le système informatique en nuage ; et
- un ensemble de valeurs destinées à être assignées par le client à chaque entité définie pour ce client dans le périmètre du modèle de contrôle d'accès, pour chaque catégorie d'attributs associée à cette entité et comprise dans une métarègle, ces valeurs assignées étant choisies parmi les données.

L'instanciation des métadonnées et des métarègles permet de créer le modèle de contrôle d'accès ACMn. L'instanciation des données, des règles, du périmètre et de l'ensemble de valeurs permet de définir la politique de contrôle d'accès ACPn qui s'appuie sur le modèle de contrôle d'accès ACMn.

Dans le mode de réalisation décrit ici, le méta-modèle META est décrit sous forme d'instructions dans un fichier informatique FILE conforme à l'invention stocké dans la mémoire non volatile 7 du système informatique en nuage 2. Aucune limitation n'est attachée au langage informatique utilisé pour décrire le méta-modèle META dans le fichier FILE. Il peut être décrit par exemple en utilisant les langages connus JSON (JavaScript Object Notation), XML (eXtensible Markup Language) ou encore YAML (Yet Another Markup Language).

On note que le méta-modèle META, par son caractère générique, permet d'instancier, autrement dit de créer, des modèles de contrôle d'accès très divers. Il peut être utilisé notamment pour instancier des modèles de contrôle d'accès connus comme par exemple un modèle de contrôle d'accès de type RBAC, OrBAC, ACL, DTE, ABAC ou MLS, comme illustré ultérieurement. Le méta-modèle META peut également être utilisé facilement pour instancier d'autres modèles de contrôle d'accès, ou des variantes de modèles de contrôle d'accès connus s'appuyant sur des caractéristiques avancées comme par exemple les notions de session, de délégation, etc.

Nous allons maintenant décrire en référence à la **figure 5** comment ce méta-modèle META est utilisé par le système 1 pour assurer le contrôle d'accès aux ressources RESS mises à disposition de ses clients CL1,...,CLN par le système informatique en nuage 2 tout en permettant à chaque client CLn, n=1,...,N de spécifier sa propre politique de contrôle d'accès et son propre modèle de contrôle d'accès pour réaliser le contrôle de l'accès aux ressources Rn parmi les ressources RESS qui lui sont allouées. Plus précisément, la figure 5 représente les principales étapes du procédé de gestion mis en œuvre par le système informatique en nuage 2 pour gérer l'accès à ses ressources RESS par les utilisateurs associés à ses clients CL1,...,CLN, et les principales étapes du procédé d'instanciation mis en œuvre par chaque dispositif client 3-n de chaque client CLn pour spécifier auprès du système informatique en nuage 2, via l'instanciation du méta-modèle META décrit précédemment, sa politique ACPn de contrôle d'accès et le modèle de contrôle d'accès ACMn sur lequel se base cette politique.

Plus précisément, on suppose que suite par exemple à l'enregistrement du client CLn auprès du système informatique en nuage 2, ce dernier lui alloue dynamiquement et virtuellement des ressources Rn parmi ses ressources RESS (étape E10) et l'invite à définir la politique de contrôle d'accès qu'il souhaite appliquer pour contrôler l'accès aux ressources Rn par ses utilisateurs.

A cet effet, le système informatique en nuage 2 fournit au dispositif 3-n du client CLn, via son interface 9 et son module de fourniture 2A (intégrés dans le module XACML PAP du système informatique en nuage 2), le méta-modèle META (étape E20).

Le client CLn, via le module d'instanciation 3B du dispositif 3-n et l'interface 9 mise à disposition par le système informatique en nuage 2, instancie le méta-modèle META obtenu de sorte à créer le modèle de contrôle d'accès ACMn et la politique de contrôle d'accès ACPn basée sur ce modèle qu'il souhaite appliquer aux ressources Rn qui lui sont appliquées (étape E30).

A cet effet, le client CLn renseigne (i.e. paramètre ou encore configure), via le module d'instanciation 3B, les différents éléments du méta-modèle META dans l'interface 9.

Deux exemples sont donnés ci-après à titre illustratif pour montrer comment le client CLn via le module d'instanciation 3B peut configurer les éléments du méta-modèle META pour créer un modèle de contrôle d'accès de type MLS et un modèle de contrôle d'accès de type RBAC.

Selon un premier exemple illustratif, le client CLn instancie le méta-modèle META de la façon suivante pour créer un modèle de contrôle d'accès de type RBAC :
- il définit comme périmètre du modèle ACMn les entités suivantes :
   ∘ pour les sujets, deux utilisateurs « user0 » et « user1 » ;
   ∘ pour les objets, une machine virtuelle « vm0 » parmi les ressources Rn ;
   ∘ pour les actions, une action de démarrage de la machine virtuelle « start » et une action d'arrêt de la machine virtuelle « stop » ;
- il définit comme métadonnées les catégories d'attributs suivantes :
   ∘ pour les sujets, une catégorie « role » regroupant des attributs de type rôle ;
   ∘ pour les objets, une catégorie « id » regroupant des attributs de type identifiants ;
   ∘ pour les actions, une catégorie « action-type » regroupant des attributs de types d'actions ;
- il définit comme données, c'est-à-dire comme valeurs possibles des catégories d'attributs spécifiées par les métadonnées :
   ∘ pour la catégorie « role », les valeurs « admin » (administrateur) et « employee » (employé) ;
   ∘ pour la catégorie « id », la valeur « vm0 »
   ∘ pour la catégorie « action-type», la valeur « vm-action »
- il définit comme métarègle une métarègle identifiant les catégories d'attributs « role », « id » et « action-type » ;
- il définit comme règle de contrôle d'accès pour prendre une décision d'autoriser ou de refuser un accès, la règle suivante : « si la catégorie « role » est « admin », la ressource requise est identifiée par « vm0 » et la catégorie « action-type » est « vm-action » alors l'instruction est « accès accepté » ». Cette règle fournit une instruction d'autorisation de l'accès ;
- enfin, il assigne les valeurs suivantes à chaque entité définie dans le périmètre du modèle de contrôle d'accès :
   ∘ à l'utilisateur user0, la valeur « admin » de la catégorie « role » ;
   ∘ à l'utilisateur user1, la valeur « employee » de la catégorie « role » ;
   ∘ à l'objet vm0, la valeur « vm0 » de la catégorie « id » ;
   ∘ à l'action start, la valeur « vm-action » de la catégorie « action-type » ; et
   ∘ à l'action stop, la valeur « vm-action » de la catégorie « action-type ».

Ainsi, dans ce modèle RBAC et la politique de contrôle d'accès créés par le client CLn à partir du méta-modèle META, seul l'utilisateur user0 qui a le rôle d'administrateur peut démarrer ou arrêter la machine virtuelle vm0. L'utilisateur user1 qui a le rôle d'employé ne peut pas accéder à la machine virtuelle vm0.

Selon un second exemple illustratif, le client CLn instancie le méta-modèle META de la façon suivante pour créer un modèle de contrôle d'accès de type MLS :
- il définit comme périmètre du modèle ACMn les entités suivantes :
   ∘ pour les sujets, trois utilisateurs « user0 », « user1 » et « user2 » ;
   ∘ pour les objets, deux machines virtuelles « vm0 » et « vm1 » parmi les ressources Rn;
   ∘ pour les actions, une action de démarrage « start » et une action d'arrêt « stop » ;
- il définit comme métadonnées les catégories d'attributs suivantes :
   ∘ pour les sujets, une catégorie « subject-security-level » regroupant des attributs de type niveau de sécurité sujet ;
   ∘ pour les objets, une catégorie « object-security-level » regroupant des attributs de type niveau de sécurité objet ;
   ∘ pour les actions, une catégorie « action-type » regroupant des attributs de types d'actions ;
- il définit comme données, c'est-à-dire comme valeurs possibles des catégories d'attributs spécifiées par les métadonnées :
   ∘ pour la catégorie « subject-security-level », les valeurs « low » (basse), « medium » (intermédiaire) et « high » (haute) ;
   ∘ pour la catégorie « object-security-level », les valeurs « low » (basse), « medium » (intermédiaire) et « high » (haute) ;
   ∘ pour la catégorie « action-type», les valeurs « vm-action » et « storage-action » ;
- il définit comme métarègle, une métarègle identifiant les catégories d'attributs « subject-security-level», « object-security-level» et « action-type » ;
- il définit comme règles de contrôle d'accès pour prendre une décision d'autoriser ou de refuser un accès :
   ∘ une première règle r1 spécifiant que « si la catégorie « subject-security-level » est « high», la ressource requise a une catégorie « object-security-level » ayant une valeur « medium », et la catégorie « action-type » d'action sur la ressource est « vm-action » alors l'instruction est « accès accepté » ». Cette première règle r1 fournit une instruction d'autorisation de l'accès ;
   ∘ une deuxième règle r2 spécifiant que « si la catégorie « subject-security-level » est « high» ou « medium », la ressource requise a une catégorie « object-security-level » ayant une valeur « low », et la catégorie « action-type » d'action sur la ressource est « vm-action » alors l'instruction est « accès accepté » ». Cette deuxième règle r2 fournit une instruction d'autorisation de l'accès ;
- enfin, il assigne les valeurs suivantes à chaque entité définie dans le périmètre du modèle de contrôle d'accès :
   ∘ à l'utilisateur user0, la valeur « high » pour la catégorie « subject-security-level » ;
   ∘ à l'utilisateur user1, la valeur « medium » pour la catégorie « subject-security-level » ;
   ∘ à l'objet vm0, la valeur « medium » pour la catégorie « object-security-level » ;
   ∘ à l'objet vm1, la valeur « low » pour la catégorie « object-security-level » ;
   ∘ à l'action start, la valeur « vm-action » de la catégorie « action-type » ; et
   ∘ à l'action stop, la valeur « vm-action » de la catégorie « action-type ».

Ainsi, dans ce modèle MLS et la politique de contrôle d'accès créés par le client CLn à partir du méta-modèle META, seuls les utilisateurs ayant un niveau de sécurité intermédiaire ou élevé ont le droit de démarrer ou d'arrêter les machines virtuelles. L'utilisateur user0 peut manipuler les machines virtuelles vm0 et vm1, et l'utilisateur user1 peut manipuler la machine vm1 seulement.

Bien entendu, ces exemples ne sont donnés qu'à titre illustratif et d'autres modèles de contrôle d'accès peuvent être créés par le client CLn à partir du méta-modèle META comme mentionné précédemment.

Le modèle de contrôle d'accès ACMn et la politique de contrôle d'accès ACPn définis par le module d'instanciation 3B du dispositif 3-n constituent une instance du méta-modèle META au sens de l'invention. Ils sont fournis par le module de fourniture 3C du dispositif 3-n via l'interface 9 au système informatique en nuage 2 (étape E40). Ils sont reçus par son module de réception 2B (intégré dans le module XACML PAP du système informatique en nuage 2) et stockés dans sa mémoire non volatile 7 par exemple (dans les modules PIP et PR définis par l'architecture XACML décrits précédemment).

Dès lors, le système informatique en nuage 2 est apte à appliquer, par l'intermédiaire de son module de sécurité 2C (intégré dans son module XACML PDP), la politique de contrôle d'accès ACPn définie par le client CLn à toute requête provenant d'un utilisateur du client CLn visant à accéder à une ressource choisie parmi les ressources Rn allouées au client CLn (étape E50). Le module de sécurité 2C s'appuie à cet effet sur les modules logiciels PIP et PR décrits précédemment de l'architecture XACML.

Le système informatique en nuage 2 procède de la même façon préférentiellement pour chacun de ses clients CLn, n=1,...,N. De cette sorte il peut appliquer pour chacun de ses clients une politique de contrôle d'accès spécifiée par celui-ci et propre à celui-ci.

## Revendications

1. Procédé de gestion d'un système informatique en nuage (2), apte à allouer à une pluralité de clients (CL1,...,CLN) des ressources informatiques et réseaux (RESS), chaque client (CLn) étant associé à au moins un utilisateur susceptible d'accéder aux ressources informatiques et réseaux allouées au client par le système informatique en nuage, ledit procédé étant mis en œuvre par ledit système informatique en nuage et comprenant, pour chaque client du système informatique en nuage :
- une étape de fourniture (E20), audit client, via une interface de contrôle (9) commune à ladite pluralité de clients (9), d'un méta-modèle (META) unique commun à tous lesdits clients et qui définit de façon générique une pluralité d'éléments permettant à chacun desdits clients de définir un modèle de contrôle d'accès et une politique de contrôle d'accès propres à ce client pour réaliser le contrôle de l'accès aux ressources qui lui sont allouées ;
- une étape de réception (E40), via ladite interface de contrôle (9), d'une instance du méta-modèle fournie par le client, ladite instance définissant pour ledit client un modèle de contrôle d'accès sélectionné par ledit client et une politique de contrôle d'accès sélectionnée par ledit client et basée sur ce modèle de contrôle d'accès ; et
- une étape d'application (E50) de ladite politique de contrôle d'accès pour contrôler un accès d'un utilisateur du client à au moins une ressource allouée au client par le système informatique en nuage.

2. Procédé de gestion selon la revendication 1 dans lequel la pluralité d'éléments du méta-modèle comprend :
- un périmètre du modèle de contrôle d'accès définissant une pluralité d'entités impliquées dans la politique de contrôle d'accès du client ;
- des métadonnées définissant pour chaque entité au moins une catégorie d'attributs associée à cette entité ;
- des données définissant des valeurs possibles pour chaque catégorie d'attributs définie par les métadonnées ;
- au moins une métarègle identifiant une ou plusieurs catégories d'attributs définies par les métadonnées et utilisées pour fournir une instruction conforme à la politique de contrôle d'accès du client ;
- au moins une règle de contrôle d'accès basée sur ladite au moins une métarègle et fournissant une instruction conforme à la politique de contrôle d'accès du client ; et
- un ensemble de valeurs assignées par le client à chaque entité définie pour ce client dans le périmètre du modèle de contrôle d'accès, pour chaque catégorie d'attributs associée à cette entité et comprise dans une métarègle, lesdites valeurs assignées étant choisies parmi les données.

3. Procédé selon la revendication 2 dans lequel ladite pluralité d'entités comprend au moins un sujet, et/ou au moins un objet, et/ou au moins une action.

4. Procédé selon la revendication 2 ou 3 dans lequel au moins une catégorie d'attributs définie pour une entité est choisie parmi :
- un niveau de sécurité ;
- un rôle ;
- un type ; et
- un domaine.

5. Procédé selon l'une quelconque des revendications 2 à 4 dans lequel au moins une instruction fournie par ladite au moins une règle comprend une autorisation ou un refus d'un accès à une ressource déterminée allouée au client par le système informatique en nuage.

6. Procédé selon l'une quelconque des revendications 1 à 5 dans lequel l'instance du méta-modèle fournie par le client définit un modèle de contrôle d'accès de type RBAC, OrBAC, ACL, DTE, ABAC ou MLS.

7. Procédé d'instanciation par un client (CL1,...,CLN) d'un système informatique en nuage (2) apte à allouer à une pluralité de clients (CL1,...,CLN) des ressources informatiques et réseaux (RESS), chaque client étant associé à au moins un utilisateur susceptible d'accéder aux ressources informatiques et réseaux allouées au client par le système informatique en nuage, ledit procédé comprenant :
- une étape d'obtention (E20), via une interface de contrôle (9) commune à ladite pluralité de clients (9), d'un méta-modèle (META) fourni par le système informatique en nuage et comprenant une pluralité d'éléments permettant audit client de définir un modèle de contrôle d'accès et une politique de contrôle d'accès propres à ce client pour réaliser le contrôle de l'accès aux ressources qui lui sont allouées, ledit méta-modèle (META) étant un méta-modèle unique commun à tous lesdits clients de ladite pluralité de clients et définissant ladite pluralité d'éléments de façon générique ;
- une étape d'instanciation (E30) du méta-modèle créant une instance définissant pour ledit client un modèle de contrôle d'accès de type RBAC, OrBAC, ACL, DTE, ABAC ou MLS sélectionné par ledit client et une politique de contrôle d'accès sélectionnée par ledit client et basée sur ce modèle de contrôle d'accès ; et
- une étape de fourniture (E40) de ladite instance au système informatique en nuage via ladite interface de contrôle (9).

8. Procédé d'instanciation selon la revendication 7 dans lequel la pluralité d'éléments du méta-modèle comprend :
- un périmètre du modèle de contrôle d'accès définissant une pluralité d'entités impliquées dans la politique de contrôle d'accès du client ;
- des métadonnées définissant pour chaque entité au moins une catégorie d'attributs associée à cette entité ;
- des données définissant des valeurs possibles pour chaque catégorie d'attributs définie par les métadonnées ;
- au moins une métarègle identifiant au moins une catégorie d'attributs définie par les métadonnées et utilisée pour fournir une instruction conforme à la politique de contrôle d'accès du client ;
- au moins une règle de contrôle d'accès définissant ladite au moins une métarègle et fournissant une instruction conforme à la politique de contrôle d'accès du client ; et
- un ensemble de valeurs assignées par le client à chaque entité définie pour ce client dans le périmètre du modèle de contrôle d'accès, pour chaque catégorie d'attributs associée à cette entité et comprise dans une métarègle, lesdites valeurs assignées étant choisies parmi les données.

9. Programme d'ordinateur (PROG1,PROG2) comportant des instructions pour l'exécution des étapes du procédé de gestion selon l'une quelconque des revendications 1 à 6 ou du procédé d'instanciation selon la revendication 7 ou 8 lorsque ledit programme est exécuté par un ordinateur.

10. Support d'enregistrement lisible par un ordinateur sur lequel est enregistré un programme d'ordinateur selon la revendication 9.

11. Système informatique en nuage (2) apte à allouer à une pluralité de clients (CL1,...,CLN) des ressources informatiques et réseaux (RESS), chaque client (CL-n) étant associé à au moins un utilisateur susceptible d'accéder aux ressources informatiques et réseaux allouées au client par le système informatique en nuage, ledit système comprenant :
- un module de fourniture (2A), configuré pour fournir à chaque client du système informatique en nuage, via une interface de contrôle (9) commune à ladite pluralité de clients (9), un méta-modèle (META) unique commun à tous lesdits clients et qui définit de façon générique une pluralité d'éléments permettant à chacun desdits clients de définir un modèle de contrôle d'accès et une politique de contrôle d'accès propres à ce client pour réaliser le contrôle de l'accès aux ressources qui lui sont allouées ;
- un module de réception (2B), apte à recevoir, via ladite interface de contrôle (9), une instance du méta-modèle fournie par chacun desdits clients, ladite instance définissant pour ce client un modèle de contrôle d'accès sélectionné par ce client et une politique de contrôle d'accès sélectionnée par ce client et basée sur ce modèle de contrôle d'accès ; et
- un module de sécurité (2C) configuré pour appliquer ladite politique de contrôle d'accès de chacun desdits clients pour contrôler un accès d'un utilisateur de ce client à au moins une ressource allouée à ce client par le système informatique en nuage.

12. Dispositif (3-1,...,3-N) d'un client (CL1,...,CLN) d'un système informatique en nuage (2) apte à allouer à une pluralité de clients des ressources informatiques et réseaux (RESS), chaque client étant associé à au moins un utilisateur susceptible d'accéder aux ressources informatiques et réseaux allouées au client par le système informatique en nuage, ledit dispositif comprenant :
- un module d'obtention (3A), configuré pour obtenir, via une interface de contrôle (9) commune à ladite pluralité de clients (9), un méta-modèle (META) fourni par le système informatique en nuage et comprenant une pluralité d'éléments permettant audit client de définir un modèle de contrôle d'accès et une politique de contrôle d'accès propres à ce client pour réaliser le contrôle de l'accès aux ressources qui lui sont allouées, ledit méta-modèle (META) étant un méta-modèle unique commun à tous lesdits clients de ladite pluralité de clients et définissant ladite pluralité d'éléments de façon générique ;
- un module d'instanciation (3B) du méta-modèle, configuré pour créer une instance du méta-modèle définissant pour ledit client un modèle de contrôle d'accès de type RBAC, OrBAC, ACL, DTE, ABAC ou MLS sélectionné par ledit client et une politique de contrôle d'accès sélectionné par ledit client et basée sur ce modèle de contrôle d'accès ; et
- un module de fourniture (3C), configuré pour fournir ladite instance au système informatique en nuage via ladite interface de contrôle (9).

13. Système (1) comprenant :
- un système informatique en nuage (2) selon la revendication 12, apte à allouer à une pluralité de clients des ressources informatiques et réseaux, chaque client étant associé à au moins un utilisateur susceptible d'accéder aux ressources informatiques et réseaux allouées au client par le système informatique en nuage; et
- une pluralité de dispositifs des clients (3-1,...,3-N) du système informatique en nuage conformes à la revendication 12.

## Patentansprüche

1. Verfahren zur Verwaltung eines Cloud-Rechnersystems (2), das dazu fähig ist, einer Vielzahl von Clients (CL1,...,CLN) Rechner- und Netzwerkressourcen (RESS) zuzuweisen, wobei jeder Client (CLn) mit mindestens einem Benutzer assoziiert ist, der dazu in der Lage ist, auf die dem Client durch das Cloud-Rechnersystem zugewiesenen Rechner- und Netzwerkressourcen zuzugreifen, wobei das Verfahren durch das Cloud-Rechnersystem umgesetzt wird und für jeden Client des Cloud-Rechnersystems Folgendes beinhaltet:
- einen Schritt des Bereitstellens (E20), für den Client und über eine Steuerungsschnittstelle (9), die der Vielzahl von Clients (9) gemein ist, eines einzigen Metamodells (META), das allen Clients gemein ist und das auf generische Weise eine Vielzahl von Elementen definiert, die es jedem der Clients gestattet, ein Zugriffssteuerungsmodell und eine Zugriffssteuerungspolitik, die für diesen Client spezifisch sind, zu definieren, um die Steuerung des Zugriffs auf die ihm zugewiesen Ressourcen durchzuführen;
- einen Schritt des Empfangens (E40), über die Steuerungsschnittstelle (9), einer durch den Client bereitgestellten Instanz des Metamodells, wobei die Instanz für den Client ein durch den Client ausgewähltes Zugriffssteuerungsmodell und eine durch den Client ausgewählte Zugriffssteuerungspolitik, die auf diesem Zugriffssteuerungsmodell basiert, definiert; und
- einen Schritt des Anwendens (E50) der Zugriffssteuerungspolitik, um einen Zugriff eines Benutzers des Clients auf mindestens eine dem Client durch das Cloud-Rechnersystem zugewiesene Ressource zu steuern.

2. Verwaltungsverfahren nach Anspruch 1, wobei die Vielzahl von Elementen des Metamodells Folgendes beinhaltet:
- einen Wirkungskreis des Zugriffssteuerungsmodells, der eine Vielzahl von Entitäten definiert, die von der Zugriffssteuerungspolitik des Clients betroffen sind;
- Metadaten, die für jede Entität mindestens eine Attributkategorie definieren, die mit dieser Entität assoziiert ist;
- Daten, die mögliche Werte für jede durch die Metadaten definierte Attributkategorie definieren;
- mindestens eine Metaregel, die eine oder mehrere durch die Metadaten definierte Attributkategorien identifiziert, die dazu verwendet werden, eine Anweisung in Übereinstimmung mit der Zugriffssteuerungspolitik des Clients bereitzustellen;
- mindestens eine Zugriffssteuerungsregel, die auf der mindestens einen Metaregel basiert und eine Anweisung in Übereinstimmung mit der Zugriffssteuerungspolitik des Clients bereitstellt; und
- einen Satz Werte, die der Client jeder Entität, die für diesen Client in dem Wirkungskreis des Zugriffssteuerungsmodells definiert ist, für jede Attributkategorie, die mit dieser Entität assoziiert ist und in einer Metaregel enthalten ist, zuordnet, wobei die zugeordneten Werte aus den Daten ausgewählt werden.

3. Verfahren nach Anspruch 2, wobei die Vielzahl von Entitäten mindestens ein Subjekt und/oder mindestens ein Objekt und/oder mindestens eine Aktion beinhaltet.

4. Verfahren nach Anspruch 2 oder 3, wobei mindestens eine Attributkategorie, die für eine Entität definiert ist, aus Folgendem ausgewählt ist:
- einem Sicherheitsniveau;
- einer Rolle;
- einem Typ; und
- einer Domäne.

5. Verfahren nach einem der Ansprüche 2 bis 4, wobei mindestens eine durch die mindestens eine Regel bereitgestellte Anweisung eine Gewährung oder eine Verweigerung eines Zugriffs auf eine bestimmte Ressource, die dem Client durch das Cloud-Rechnersystem zugewiesen wird, beinhaltet.

6. Verfahren nach einem der Ansprüche 1 bis 5, wobei die durch den Client bereitgestellte Instanz des Metamodells eine Zugriffssteuerungsmodell vom Typ RBAC, OrBAC, ACL, DTE, ABAC oder MLS definiert.

7. Verfahren zur Instanziierung durch einen Client (CL1,...,CLN) eines Cloud-Rechnersystems (2), das dazu fähig ist, einer Vielzahl von Clients (CL1,...,CLN) Rechner- und Netzwerkressourcen (RESS) zuzuweisen, wobei jeder Client mit mindestens einem Benutzer assoziiert ist, der dazu in der Lage ist, auf die dem Client durch das Cloud-Rechnersystem zugewiesenen Rechner- und Netzwerkressourcen zuzugreifen, wobei das Verfahren Folgendes beinhaltet:
- einen Schritt des Erhaltens (E20), über eine Steuerungsschnittstelle (9), die der Vielzahl von Clients (9) gemein ist, eines Metamodells (META), das durch das Cloud-Rechnersystem bereitgestellt wird und eine Vielzahl von Elementen beinhaltet, die es dem Client gestattet, ein Zugriffssteuerungsmodell und eine Zugriffssteuerungspolitik, die für diesen Client spezifisch sind, zu definieren, um die Steuerung des Zugriffs auf die ihm zugewiesenen Ressourcen durchzuführen, wobei das Metamodell (META) ein einziges Metamodell ist, das allen Clients der Vielzahl von Clients gemein ist und die Vielzahl von Elementen generisch definiert;
- einen Schritt des Instanziierens (E30) des Metamodells, wodurch eine Instanz erzeugt wird, die für den Client ein Zugriffssteuerungsmodell vom Typ RBAC, OrBAC, ACL, DTE, ABAC oder MLS, das durch den Client ausgewählt wird, und eine Zugriffssteuerungspolitik, die durch den Client ausgewählt wird und auf diesem Zugriffssteuerungsmodell basiert, definiert; und
- einen Schritt des Bereitstellens (E40) der Instanz für das Cloud-Rechnersystem über die Steuerungsschnittstelle (9).

8. Instanziierungsverfahren nach Anspruch 7, wobei die Vielzahl von Elementen des Metamodells Folgendes beinhaltet:
- einen Wirkungskreis des Zugriffssteuerungsmodells, der eine Vielzahl von Entitäten definiert, die von der Zugriffssteuerungspolitik des Clients betroffen sind;
- Metadaten, die für jede Entität mindestens eine Attributkategorie definieren, die mit dieser Entität assoziiert ist;
- Daten, die mögliche Werte für jede durch die Metadaten definierte Attributkategorie definieren;
- mindestens eine Metaregel, die mindestens eine durch die Metadaten definierte Attributkategorie identifiziert, die dazu verwendet wird, eine Anweisung in Übereinstimmung mit der Zugriffssteuerungspolitik des Clients bereitzustellen;
- mindestens eine Zugriffssteuerungsregel, die die mindestens eine Metaregel definiert und eine Anweisung in Übereinstimmung mit der Zugriffssteuerungspolitik des Clients bereitstellt; und
- einen Satz Werte, die der Client jeder Entität, die für diesen Client in dem Wirkungskreis des Zugriffssteuerungsmodells definiert ist, für jede Attributkategorie, die mit dieser Entität assoziiert ist und in einer Metaregel enthalten ist, zuordnet, wobei die zugeordneten Werte aus den Daten ausgewählt werden.

9. Computerprogramm (PROG1,PROG2), das Anweisungen umfasst, die bei der Ausführung des Programms durch einen Computer die Schritte des Verwaltungsverfahrens nach einem der Ansprüche 1 bis 6 oder des Instanziierungsverfahrens nach Anspruch 7 oder 8 ausführen.

10. Computerlesbares Speichermedium, auf dem ein Computerprogramm nach Anspruch 9 gespeichert ist.

11. Cloud-Rechnersystem (2), das dazu fähig ist, einer Vielzahl von Clients (CL1,...,CLN) Rechner- und Netzwerkressourcen (RESS) zuzuweisen, wobei jeder Client (CL-n) mit mindestens einem Benutzer assoziiert ist, der dazu in der Lage ist, auf die dem Client durch das Cloud-Rechnersystem zugewiesenen Rechner- und Netzwerkressourcen zuzugreifen, wobei das System Folgendes beinhaltet:
- ein Bereitstellungsmodul (2A), das dazu konfiguriert ist, jedem Client des Cloud-Rechnersystems über eine Steuerungsschnittstelle (9), die der Vielzahl von Clients (9) gemein ist, ein einziges Metamodell (META) bereitzustellen, das allen Clients gemein ist und auf generische Weise eine Vielzahl von Elementen definiert, die es jedem der Clients gestattet, ein Zugriffssteuerungsmodell und eine Zugriffssteuerungspolitik, die für diesen Client spezifisch sind, zu definieren, um die Steuerung des Zugriffs auf die ihm zugewiesenen Ressourcen durchzuführen;
- ein Empfangsmodul (2B), das dazu fähig ist, über die Steuerungsschnittstelle (9) eine durch jeden der Clients bereitgestellte Instanz des Metamodells zu empfangen, wobei die Instanz für diesen Client ein durch diesen Client ausgewähltes Zugriffssteuerungsmodell und eine durch diesen Client ausgewählte Zugriffssteuerungspolitik, die auf diesem Zugriffssteuerungsmodell basiert, definiert; und
- ein Sicherheitsmodul (2C), das dazu konfiguriert ist, die Zugriffssteuerungspolitik jedes der Clients anzuwenden, um einen Zugriff eines Benutzers dieses Clients auf mindestens eine diesem Client durch das Cloud-Rechnersystem zugewiesene Ressource zu steuern.

12. Vorrichtung (3-1,...,3-N) eines Clients (CL1,...,CLN) eines Cloud-Rechnersystems (2), das dazu fähig ist, einer Vielzahl von Clients Rechner- und Netzwerkressourcen (RESS) zuzuweisen, wobei jeder Client mit mindestens einem Benutzer assoziiert ist, der dazu in der Lage ist, auf die dem Client durch das Cloud-Rechnersystem zugewiesenen Rechner- und Netzwerkressourcen zuzugreifen, wobei die Vorrichtung Folgendes beinhaltet:
- ein Erhaltungsmodul (3A), das dazu konfiguriert ist, über eine Steuerungsschnittstelle (9), die der Vielzahl von Clients (9) gemein ist, ein Metamodell (META) zu erhalten, das durch das Cloud-Rechnersystem bereitgestellt wird und eine Vielzahl von Elementen beinhaltet, die es dem Client gestattet, ein Zugriffssteuerungsmodell und eine Zugriffssteuerungspolitik, die für diesen Client spezifisch sind, zu definieren, um die Steuerung des Zugriffs auf die ihm zugewiesenen Ressourcen durchzuführen, wobei das Metamodell (META) ein einziges Metamodell ist, das allen Clients der Vielzahl von Clients gemein ist und die Vielzahl von Elementen generisch definiert;
- ein Modul zur Instanziierung (3B) des Metamodells, das dazu konfiguriert ist, eine Instanz des Metamodells zu erzeugen, die für den Client ein Zugriffssteuerungsmodell vom Typ RBAC, OrBAC, ACL, DTE, ABAC oder MLS, das durch den Client ausgewählt wird, und eine Zugriffssteuerungspolitik, die durch den Client ausgewählt wird und auf diesem Zugriffssteuerungsmodell basiert, definiert; und
- ein Bereitstellungsmodul (3C), das dazu konfiguriert ist, dem Cloud-Rechnersystem die Instanz über die Steuerungsschnittstelle (9) bereitzustellen.

13. System (1), beinhaltend:
- ein Cloud-Rechnersystem (2) nach Anspruch 12, das dazu fähig ist, einer Vielzahl von Clients Rechner- und Netzwerkressourcen zuzuweisen, wobei jeder Client mit mindestens einem Benutzer assoziiert ist, der dazu in der Lage ist, auf die dem Client durch das Cloud-Rechnersystem zugewiesenen Rechner- und Netzwerkressourcen zuzugreifen; und
- eine Vielzahl von Vorrichtungen (3-1,...,3-N) der Clients des Cloud-Rechnersystems nach Anspruch 12.

## Claims

1. Method for managing a cloud computing system (2), able to allocate computing and network resources (RESS) to a plurality of clients (CL1,...,CLN), each client (CLn) being associated with at least one user likely to access the computing and network resources allocated to the client by the cloud computing system, said method being performed by said cloud computing system and comprising, for each client of the cloud computing system:
- a step (E20) of providing, to said client, via a control interface (9) common to said plurality of clients (9), a single meta-model (META) common to all of said clients and that generically defines a plurality of elements enabling each of said clients to define an access control model and an access control policy specific to this client in order to control access to the resources allocated thereto;
- a step (E40) of receiving, via said control interface (9), an instance of the meta-model provided by the client, said instance defining, for said client, an access control model selected by said client and an access control policy selected by said client and based on this access control model; and
- a step (E50) of applying said access control policy in order to control access for a user of the client to at least one resource allocated to the client by the cloud computing system.

2. Management method according to Claim 1, wherein the plurality of elements of the meta-model comprises:
- a perimeter of the access control model defining a plurality of entities involved in the access control policy of the client;
- metadata defining, for each entity, at least one attribute category associated with that entity;
- data defining possible values for each attribute category defined by the metadata;
- at least one meta-rule identifying one or several attribute categories defined by the metadata and used to provide an instruction in accordance with the access control policy of the client;
- at least one access control rule based on said at least one meta-rule and providing an instruction in accordance with the access control policy of the client; and
- a set of values assigned by the client to each entity defined for this client within the perimeter of the access control model, for each attribute category associated with this entity and contained in a meta-rule, said assigned values being selected from the data.

3. Method according to Claim 2, wherein said plurality of entities comprises at least one subject, and/or at least one object, and/or at least one action.

4. Method according to Claim 2 or 3, wherein at least one attribute category defined for an entity is selected from:
- a security level;
- a role;
- a type; and
- a domain.

5. Method according to any one of Claims 2 to 4, wherein at least one instruction provided by said at least one rule comprises an authorization or a denial of access to a determined resource allocated to the client by the cloud computing system.

6. Method according to any one of Claims 1 to 5, wherein the instance of the meta-model provided by the client defines an RBAC, OrBAC, ACL, DTE, ABAC or MLS access control model.

7. Method for instantiating, by a client (CL1,...,CLN), a cloud computing system (2) able to allocate computing and network resources (RESS) to a plurality of clients (CL1,...,CLN), each client being associated with at least one user likely to access the computing and network resources allocated to the client by the cloud computing system, said method comprising:
- a step (E20) of obtaining, via a control interface (9) common to said plurality of clients (9), a meta-model (META) provided by the cloud computing system and comprising a plurality of elements allowing said client to define an access control model and an access control policy specific to this client in order to control access to the resources allocated thereto, said meta-model (META) being a single meta-model common to all of said clients of said plurality of clients and defining said plurality of elements generically;
- a step (E30) of instantiating the meta-model, creating an instance defining, for said client, an RBAC, OrBAC, ACL, DTE, ABAC or MLS access control model selected by said client and an access control policy selected by said client and based on this access control model; and
- a step (E40) of providing said instance to the cloud computing system via said control interface (9).

8. Instantiation method according to Claim 7, wherein the plurality of elements of the meta-model comprises:
- a perimeter of the access control model defining a plurality of entities involved in the access control policy of the client;
- metadata defining, for each entity, at least one attribute category associated with that entity;
- data defining possible values for each attribute category defined by the metadata;
- at least one meta-rule identifying at least one attribute category defined by the metadata and used to provide an instruction in accordance with the access control policy of the client;
- at least one access control rule defining said at least one meta-rule and providing an instruction in accordance with the access control policy of the client; and
- a set of values assigned by the client to each entity defined for this client in the perimeter of the access control model, for each attribute category associated with this entity and contained in a meta-rule, said assigned values being selected from the data.

9. Computer program (PROG1, PROG2) comprising instructions for executing the steps of the management method according to any one of Claims 1 to 6 or of the instantiation method according to Claim 7 or 8 when said program is executed by a computer.

10. Computer-readable recording medium on which a computer program according to Claim 9 is recorded.

11. Cloud computing system (2) able to allocate computing and network resources (RESS) to a plurality of clients (CL1,...,CLN), each client (CL-n) being associated with at least one user likely to access the computing and network resources allocated to the client by the cloud computing system, said system comprising:
- a provision module (2A), configured to provide, to each client of the cloud computing system, via a control interface (9) common to said plurality of clients (9), a single meta-model (META) common to all of said clients and that generically defines a plurality of elements enabling each of said clients to define an access control model and an access control policy specific to this client in order to control access to the resources allocated thereto;
- a reception module (2B), able to receive, via said control interface (9), an instance of the meta-model provided by each of said clients, said instance defining, for this client, an access control model selected by this client and an access control policy selected by this client and based on this access control model; and
- a security module (2C) configured to apply said access control policy of each of said clients in order to control access for a user of this client to at least one resource allocated to this client by the cloud computing system.

12. Device (3-1,...,3-N) of a client (CL1,...,CLN) of a cloud computing system (2) able to allocate computing and network resources (RESS) to a plurality of clients, each client being associated with at least one user likely to access the computing and network resources allocated to the client by the cloud computing system, said device comprising:
- an obtainment module (3A), configured to obtain, via a control interface (9) common to said plurality of clients (9), a meta-model (META) provided by the cloud computing system and comprising a plurality of elements enabling said client to define an access control model and an access control policy specific to this client in order to control access to the resources allocated thereto, said meta-model (META) being a single meta-model common to all of said clients of said plurality of clients and defining said plurality of elements generically;
- an instantiation module (3B) for instantiating the meta-model, configured to create an instance of the meta-model defining, for said client, an RBAC, OrBAC, ACL, DTE, ABAC or MLS access control model selected by said client and an access control policy selected by said client and based on this access control model; and
- a provision module (3C), configured to provide said instance to the cloud computing system via said control interface (9).

13. System (1) comprising:
- a cloud computing system (2) according to Claim 12, able to allocate computing and network resources to a plurality of clients, each client being associated with at least one user likely to access the computing and network resources allocated to the client by the cloud computing system; and
- a plurality of client devices (3-1,...,3-N) of the cloud computing system according to Claim 12.
